# EUROPÄISCHE PATENTSCHRIFT

(11) **EP 3 571 082 B1**
(45) Veröffentlichungstag und Bekanntmachung des Hinweises auf die Patenterteilung: **07.10.2020**
(21) Anmeldenummer: 17816776.3
(22) Anmeldetag: 13.12.2017
(51) Int. Cl.: B60K 35/00, B60K 37/06, B60R 11/02, G06F 1/16, B60R 11/00

(54) **KOMBIINSTRUMENT MIT VERFORMBARER ANZEIGE**
INSTRUMENT CLUSTER HAVING A DEFORMABLE DISPLAY
COMBINÉ D'INSTRUMENTS À AFFICHAGE DÉFORMABLE

(30) Priorität: 20.01.2017 DE 102017200949
(43) Veröffentlichungstag der Anmeldung: 27.11.2019
(73) Patentinhaber: Audi AG, 85045 Ingolstadt (DE)
(72) Erfinder: HÉLOT, Jacques, 85051 Ingolstadt (DE); MERTENS, Joris, 85051 Ingolstadt (DE); REDEKER, Immo, 85051 Ingolstadt (DE)
(86) Internationale Anmeldenummer: PCT/EP2017/082716
(87) Internationale Veröffentlichungsnummer: WO 2018/134004

(56) Entgegenhaltungen:
- DE-A1-102012 010 679
- DE-A1-102012 010 679
- DE-A1-102013 012 892
- DE-A1-102014 016 225
- DE-A1-102014 016 225
- DE-A1-102014 016 323
- DE-A1-102014 016 323
- DE-A1-102014 221 092
- DE-A1-102014 221 092
- DE-A1-102015 009 141
- DE-A1-102015 009 141

## Beschreibung

Die Erfindung betrifft ein Kombiinstrument mit einer verformbaren Anzeige. Darüber hinaus betrifft die Erfindung ein Fahrzeug, das mit einem entsprechenden Kombiinstrument ausgestattet ist.

Fahrzeuge für den Straßenverkehr sind üblicherweise mit einer Anzeige ausgestattet, die es dem Fahrer erlaubt, momentane Fahrzeuginformationen bzw. Fahrzeugzustände abzulesen. Dazu gehören üblicherweise die momentane Geschwindigkeit, die momentane Drehzahl des Motors, die Tankfüllmenge und weitere Informationen. Solche Anzeigen werden auch Kombiinstrumente genannt, da sie eine kombinierte Darstellung von Informationen gestatten. Des Weiteren gibt es weitere Anzeigeeinrichtungen, die z.B. zwischen dem Fahrer und dem Beifahrer in einer sogenannten Mittelkonsole angeordnet sind. Andere Anzeigeeinrichtungen sind bspw. in der Rückenlehne eines Vordersitzes angeordnet, um dem jeweiligen Fahrgast, der hinter diesem Sitz im Fahrzeug sitzt, ein Unterhaltungsprogramm anzubieten.

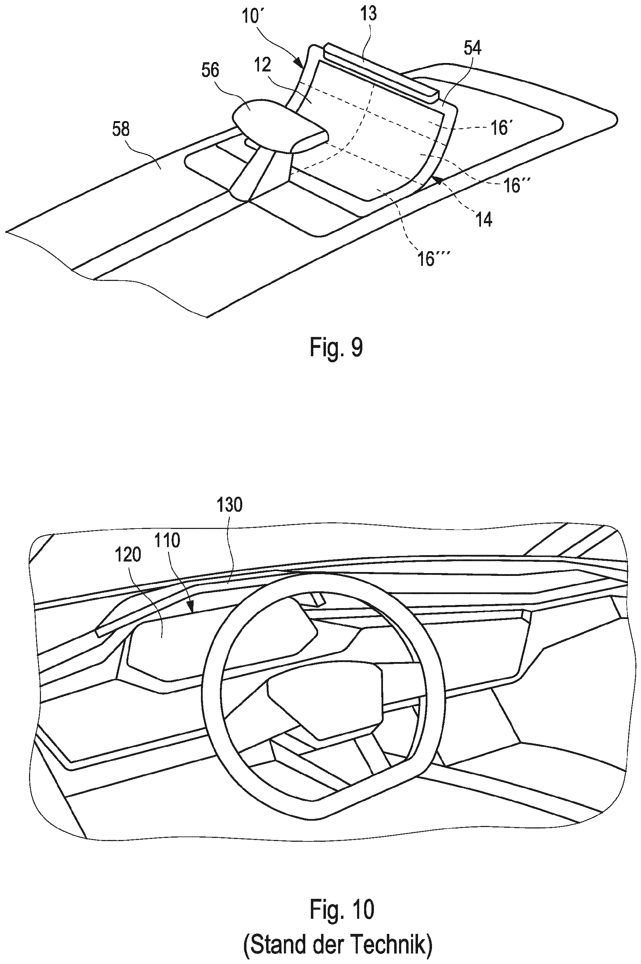

Bisher ist es - wie in Figur 10 gezeigt - üblich, diese Anzeigeeinrichtungen 110 mit einer Anzeige 120 statisch im Fahrzeug anzuordnen, d.h., dass die Anzeigeeinrichtungen 110 bzw. die Anzeige 120 nicht schwenkbar oder in ihrer Form veränderbar angeordnet sind. Bekannt sind jedoch gebogene Anzeigen oder Anzeigen, die insgesamt herausklappbar sind. Damit die Anzeigen 120 bei Sonneneinstrahlung dennoch gut ablesbar und der Inhalt erkennbar ist, ist im Bereich um die Anzeigeeinrichtung 110 üblicherweise eine Sonnenschutzeinrichtung 130 in Form eines Überhangs der Verkleidung oder einer Abschirmung vorgesehen. Besonders gut ist dies in Figur 10 bei der Armaturentafel für den Fahrer vor dem Lenkrad zu erkennen. Alternativ ist auch bekannt mit einer Änderung der Helligkeit der Anzeige auf die Sonneneinstrahlung zu reagieren.

Aus der DE 10 2014 009 609 A1 ist eine Displayanordnung für eine Mittelkonsole bekannt, bei der das Display ein Fach hinter dem Display verdeckt, wobei das Display klappbar ist, um das verdeckte Fach freizugeben und den Zugang dazu zu ermöglichen. Das klappbare Display kann dabei mit oder ohne Scharnier ausgeführt sein.

Aus der CN 104 163 134 A ist ein flexibles transparentes OLED (Organic Light Emitting Diode)-Display bekannt, das an einer Windschutzscheibe eines Fahrzeugs angeordnet ist. Das Display und wenigstens zwei weitere Infrarotkameras sind mit einem Steuerungssystem im Fahrzeug verbunden. Ein Trägermaterial des flexiblen Displays und ein Gehäuse sind aus einem flexiblen Material hergestellt. Das Display zeigt Umgebungsinformationen außerhalb des Fahrzeugs an, die von den wenigstens zwei Infrarotkameras aufgenommen wurden.

Aus der DE 10 2014 019 125 A1, die von der selben Anmelderin wie die vorliegende Erfindung stammt, ist eine Interieureinrichtung mit einem berührungsempfindlichen Bildschirm zur Steuerung einer steuerbaren Einrichtung bekannt, wobei die Neigung, die Krümmung und/oder die Position des Bildschirms relativ zu der Interieureinrichtung verstellbar ist, wobei eine Steuereinrichtung des Kraftfahrzeugs dazu ausgelegt ist, die Neigung, Krümmung und/oder Position des Bildschirms in Abhängigkeit von einer Lehnenneigung einer Rückenlehne und/oder Position des Sitzes in Vorwärtsrichtung zu steuern.

Nachteilig bei dem bekannten Stand der Technik ist, dass das Display jeweils ausschließlich als Ganzes in seiner Position verstellbar ist, d.h. zu schwenken oder zu drehen ist, um z.B. den Komfort zu erhöhen. Insbesondere ist ein schwenkbares Display nur für Unterhaltungsanzeigen wie in der Mittelkonsole oder in der Rückenlehne des Vordersitzes vorgesehen. Darüber hinaus sind bisherige Displays nur dazu eingerichtet, über die Inhalte des Displays flexibel auf Situationen zu reagieren.

Die DE 10 2014 016323 A1 betrifft eine Anzeigevorrichtung für einen Kraftwagen, mit einer flexiblen Anzeigeeinrichtung und mit einer Verstelleinrichtung, welche dazu ausgebildet ist, die Anzeigeeinrichtung von einer Verstauposition in eine Gebrauchsposition zu bewegen, wobei die Verstelleinrichtung dazu ausgebildet ist, die Anzeigeeinrichtung von der Verstauposition in die Gebrauchsposition zu biegen.

Die DE 10 2014 221 092 A1 schlägt ein Verfahren zur Verformung einer elastisch verformbaren Anzeige- und Bedieneinrichtung in einem Kraftfahrzeug mittels wenigstens einer Verformungseinrichtung vor. Es wird bei der Verformung zumindest ein Großteil der Anzeige- und Bedieneinrichtung von einem Ausgangszustand zu einem Endzustand in Richtung eines Bedieners gekrümmt. Hierdurch kann die Erreichbarkeit der Anzeige- und Bedieneinrichtung für einen Bediener deutlich erleichtert und der Bedienkomfort erhöht werden.

Aus der DE 10 2014 016 225 A1 ist ein Verfahren zum Betreiben einer Anzeigeeinrichtung eines Kraftwagens bekannt, bei welchem eine Ausrichtung der Anzeigeeinrichtung erfasst wird, wobei mittels der Anzeigeeinrichtung eine graphische Benutzeroberfläche in einem fahrerorientierten Betriebsmodus angezeigt wird, falls erfasst worden ist, dass die Anzeigeeinrichtung auf einen Fahrerplatz ausgerichtet ist und die graphische Benutzeroberfläche in einem beifahrerorientierten Betriebsmodus angezeigt wird, falls erfasst worden ist, dass die Anzeigeeinrichtung auf einen Beifahrerplatz ausgerichtet ist.

Die DE 10 2015 009 141 A1 betrifft eine Anzeigeeinrichtung für einen Innenraum eines Kraftfahrzeugs, die mehrere Anzeigefelder und ein Führungssystem aufweist. Das Führungssystem weist mindestens zwei Positionierungsanordnungen auf, wobei mit jeder Positionierungsanordnung eine bandförmige Fläche definiert ist, in der mindestens ein Anzeigefeld angeordnet ist. Mindestens eine Positionierungsanordnung ist als Schienenanordnung ausgebildet, die zwei zueinander parallel verlaufende Schienen aufweist, die zumindest abschnittsweise kurvenförmig sind und entlang denen mindestens ein Anzeigefeld, das flexibel ist, positionierbar ist.

Die DE 10 2012 010 679 A1 offenbart eine Anzeigevorrichtung für ein Kraftfahrzeug mit einem mittels einer Verformungsvorrichtung elastisch verformbaren Anzeigefeld.

Aufgabe der vorliegenden Erfindung ist es somit, wenigstens einige der angesprochenen Nachteile und Probleme zu adressieren. Insbesondere soll eine Lösung angegeben werden, die es erlaubt, eine Anzeigeeinrichtung in jeder Situation gut ablesen zu können. Zumindest soll zu den bekannten Lösungen wenigstens eine Alternative vorgeschlagen werden.

Die Aufgabe wird gelöst durch ein Kombiinstrument gemäß Patentanspruch 1 sowie durch ein Fahrzeug gemäß Patentanspruch 11. Weitere jeweilige Ausgestaltungen gehen aus den abhängigen Patentansprüchen und der Beschreibung hervor.

Erfindungsgemäß wird somit ein Kombiinstrument zum Anzeigen von Fahrzeuginformationen mit einer verformbaren Anzeige, einer Stützstruktur, mindestens einem Sensorelement und mindestens einem Bewegungselement vorgeschlagen, wobei die verformbare Anzeige auf der Stützstruktur angeordnet ist und die Stützstruktur abhängig von von dem Sensorelement wahrgenommenen Umwelteinflüssen aus einer ersten Stellung in eine zweite Stellung mittels des mindestens einen Bewegungselements bewegbar ist.

Die verformbare Anzeige ist somit auf einer Struktur angeordnet, die für sich verstellbar ist. Die Bewegungselemente steuern die Stützstruktur und erlauben, dass die Stützstruktur in eine beliebige Stellung bewegbar ist. Die Bewegungselemente können Aktuatoren umfassen, die auf die Stützstruktur einwirken. Da die Anzeige selber verformbar ist und auf der Stützstruktur angeordnet ist, folgt sie der Bewegung der Stützstruktur in die jeweilige vorgesehene Richtung. Das Sensorelement ist dazu eingerichtet, z.B. die Lichtintensität, die auf die Anzeige fällt zu messen und zu verarbeiten. Die von dem Sensorelement aufgenommenen Werte werden an eine Steuereinrichtung weitergeleitet. Die Steuerung der Bewegungselemente erfolgt über eine Steuereinrichtung.

Ein Fahrer kann dadurch auch die Anzeige zum Anzeigen von Fahrzeuginformationen und Fahrzeugzuständen individuell an seine Bedürfnisse anpassen. Erkennt die Steuereinrichtung, dass die Lichtintensität hoch ist, wird beispielsweise die Stützstruktur so verstellt, dass ein Schattenwurf von der Anzeige selber auf die übrige Anzeige fällt. Dadurch nimmt die Lichtintensität auf der Anzeige ab und die Anzeige ist besser ablesbar und es kann auf eine gesonderte Abschirmung für die Anzeige im Fahrzeug verzichtet werden. Somit kann die Instrumenteneinheit leichter ausgeführt werden. Der Innenraum bietet ein erhöhtes Raumgefühl und wirkt optisch modern. Das Kombiinstrument ist aber auch dazu ausgelegt, sich automatisch an Umgebungsbedingungen anzupassen.

Eine vorteilhafte Weiterbildung des Kombiinstruments ist dadurch gekennzeichnet, dass die Stützstruktur mehrere einzelne Stützelemente umfasst, die unabhängig voneinander bewegbar sind. Dadurch wird die Einstellung der Anzeige für den Fahrer nach den eigenen Bedürfnissen weiter individualisierbar. Beispielsweise kann bei Sonneneinstrahlung aus einer bestimmten Richtung gezielt ein Stützelement so verstellt werden, dass ein Schatten auf die abzulesende Anzeige geworfen wird, so dass die Anzeige weiterhin gut ablesbar ist. Die individuelle Verstellung des Kombiinstruments kann aber auch automatisch als Folge des erkannten und ausgewerteten Sensorwertes erfolgen, um die Lesbarkeit der Anzeige zu gewährleisten.

Eine andere vorteilhafte Ausgestaltung des Kombiinstruments ist dadurch gekennzeichnet, dass die Stützstruktur abhängig von einer Fahrzeugeinstellung aus der ersten Stellung in die zweite Stellung bewegbar ist. Beispielsweise verändert sich die Stellung der Anzeige abhängig vom Fahrtmodus, d.h., dass bei Auswahl eines Sportmodus nur die notwendigsten Informationen für den Fahrer sichtbar sind, indem die Anzeige sich so verstellt, dass ein Teil der Informationen verdeckt ist, wohingegen bei einem anderen Fahrtmodus alle Informationen für den Fahrer sichtbar sind, indem die Anzeige vollständig für den Fahrer einsehbar ist.

Das Kombiinstrument ist dadurch gekennzeichnet, dass die verformbare Anzeige um eine erste Achse und/oder um wenigstens eine zweite Achse zumindest abschnittweise drehbar und dadurch verformbar ist. Die Anzeige ist somit nicht nur in eine Richtung verformbar. Demzufolge sind auch die einzelnen Stützelemente einzeln um die erste und/oder zweite Achse bewegbar, da diese die verformbare Anzeige bewegen.

Eine nicht der Erfindung entsprechende Ausführung des Kombiinstruments ist dadurch gekennzeichnet, dass die wenigstens eine zweite Achse zu der ersten Achse im Wesentlichen parallel angeordnet ist. Dadurch kann die Anzeige in wenigstens drei Abschnitte eingeteilt werden, wodurch die Abschnitte unabhängig voneinander um die jeweiligen Achsen gedreht werden können. Die einzelnen Abschnitte der Anzeige können somit individuell zueinander eingestellt werden, um bspw. sich gegenseitig vor starkem Lichteinfall zu schützen, um eine gute Ablesbarkeit der einzelnen Abschnitte zu gewährleisten.

Die der Erfindung entsprechende Ausgestaltung des Kombiinstruments sieht vor, dass die zweite Achse im Wesentlichen quer zu der ersten Achse angeordnet ist. Dadurch kann die Anzeige in verschiedene Richtungen verstellt werden. Ein Abschnitt kann somit seitlich verstellt werden, wohingegen ein anderer Abschnitt nach oben oder unten verstellt werden kann.

Eine weitere vorteilhafte Weiterbildung des Kombiinstruments ist dadurch gekennzeichnet, dass in der ersten Stellung die verformbare Anzeige im Wesentlichen ebenflächig ausgebildet ist. In dieser Stellung ist somit die gesamte Anzeige sichtbar. Eine solche Stellung nimmt die Anzeige bspw. bei wenig Lichteinfall oder in einem entsprechenden Fahrtmodus ein.

Eine noch weitere vorteilhafte Ausgestaltung des Kombiinstruments sieht vor, dass in einer Zwischenstellung zwischen der ersten und der zweiten Stellung und/oder in der ersten Stellung und/oder in der zweiten Stellung wenigstens ein Stützelement einen von Null Grad (0°) verschiedenen Winkel zu den jeweiligen anderen Stützelementen aufweist. Der Winkel wird dabei in Bezug auf die Ebene gemessen, in der die Stützelemente bzw. die verformbare Anzeige im Wesentlichen ebenflächig vorliegen. Die Stützelemente stehen somit in einem Winkel ungleich 180° oder 360° zueinander, wenn sie in der zweiten Stellung angeordnet sind. Dadurch weisen auch Abschnitte der Anzeige einen Winkel ungleich 180° oder 360° zueinander auf. Daher kann die Anzeige so verstellt werden, dass bei starkem Lichteinfall die Anzeige selber eine Abschirmung gegen den Lichteinfall bietet.

Das Kombiinstrument wird vorteilhaft dadurch weitergebildet, dass das Kombiinstrument dazu eingerichtet ist, die Anzeigen der Fahrzeuginformation in Abhängigkeit der Stellung der Stützstruktur für einen Fahrer in einem gleichbleibenden Winkel anzuzeigen. Ist z.B. die Stützstruktur geneigt, um die Anzeige vor Sonneneinstrahlung zu schützen, kann der Fahrer weiterhin die Anzeige so ablesen, als wäre die Stützstruktur nicht geneigt. Dazu ist das Kombiinstrument dazu eingerichtet, die Darstellung der Informationen auf der Anzeige so zu verzerren, dass, wenn der Fahrer in einem Winkel, d.h. nicht von vorne bzw. nicht senkrecht, auf die geneigte Anzeige schaut, er die Darstellungen auf der Anzeige unverzerrt wahrnimmt, als wäre die Stützstruktur nicht geneigt.

Eine weitere vorteilhafte Weiterbildung des Kombiinstruments ist dadurch gekennzeichnet, dass das Kombiinstrument eingerichtet ist, einen Augpunkt des Fahrers zu verfolgen und die Darstellung der Informationen auf der verformbaren Anzeige an eine Position des Augpunktes anzupassen. Ändert z.B. der Fahrer die Neigung des Sitzes oder nimmt ein anderer größerer oder kleinerer Fahrer Platz, schaut der Fahrer also aus einem anderen Winkel auf die Anzeige, ändert sich die Darstellung der Information auf der Anzeige so, dass der Fahrer sie gleichbleibend wahrnimmt.

Eine andere vorteilhafte Ausgestaltung des Kombiinstruments sieht vor, dass die verformbare Anzeige eine OLED-Anzeige ist. Eine solche Anzeige eignet sich besonders für verformbare Anzeigen.

Das Kombiinstrument wird dadurch weitergebildet, dass das Bewegungselement eine Hebelanordnung zum Bewegen der Stützelemente umfasst. Mittels der Hebelanordnung können die Stützelemente in einfacher Weise bewegt werden. Eine solche Ausführung mit Hebeln ist besonders kostengünstig und wartungsarm.

Eine andere vorteilhafte Weiterbildung des Kombiinstruments ist dadurch gekennzeichnet, dass die Stützelemente in Schichten, die in Bezug zueinander verschiebbar sind, übereinander angeordnet sind. Dadurch wird eine besonders Platz sparende Anordnung des Kombiinstruments ermöglicht.

Des Weiteren wird erfindungsgemäß ein Fahrzeug mit einem Fahrzeuginnenraum vorgeschlagen, der wenigstens ein Kombiinstrument nach einer der vorstehenden beschriebenen Ausführungsformen umfasst. Eine Ausgestaltung des Fahrzeugs ist dadurch gekennzeichnet, dass eine Instrumententafel wenigstens ein Kombiinstrument nach einer vorstehend beschriebenen Ausführungsform umfasst.

Eine andere Ausgestaltung des Fahrzeug sieht vor, dass die Instrumententafel frei von einer Abschirmvorrichtung zum Abschirmen der verformbaren Anzeige vor Sonnenlicht ist. Dadurch kann die Instrumenteneinheit und somit das Fahrzeug insgesamt leichter ausgeführt werden.

Weitere Vorteile und Ausgestaltungen ergeben sich aus der Beschreibung und den beiliegenden Zeichnungen. I Ausgestaltungen werden anhand von Ausführungsformen in den Zeichnungen schematisch dargestellt und werden unter Bezugnahme auf die begleitenden Zeichnungen schematisch und ausführlich beschrieben, wobei in den Figuren gleiche Elemente mit gleichen Bezugszeichen versehen sind.
Fig. 1 zeigt perspektivische Ansichten einer Ausführungsform eines I Kombiinstruments,
Fig. 2 zeigt Draufschnittansichten der Ausführungsform des Kombiinstruments der Fig. 1,
Fig. 3 zeigt perspektivische Ansichten einer weiteren Ausführungsform eines I Kombiinstruments,
Fig. 4 zeigt Seitenschnittansichten der Ausführungsform des Kombiinstruments der Fig. 3,
Fig. 5 zeigt Seitenschnittansichten einer weiteren Ausführungsform eines I Kombiinstruments,
Fig. 6 zeigt perspektivische Ansichten einer weiteren Ausführungsform eines I Kombiinstruments,
Fig. 7 zeigt eine Seitenansicht eines Fahrzeuginnenraums mit einer weiteren Ausführungsform eines I Kombiinstruments,
Fig. 8 zeigt eine perspektivische Ansicht eines Fahrzeuginnenraums mit einer Ausführungsform eines Kombiinstruments,
Figur 9 zeigt eine perspektivische Ansicht einer Ausführungsform eines I Bediendisplays, und
Fig. 10 zeigt einen Fahrzeuginnenraum des Stands der Technik.

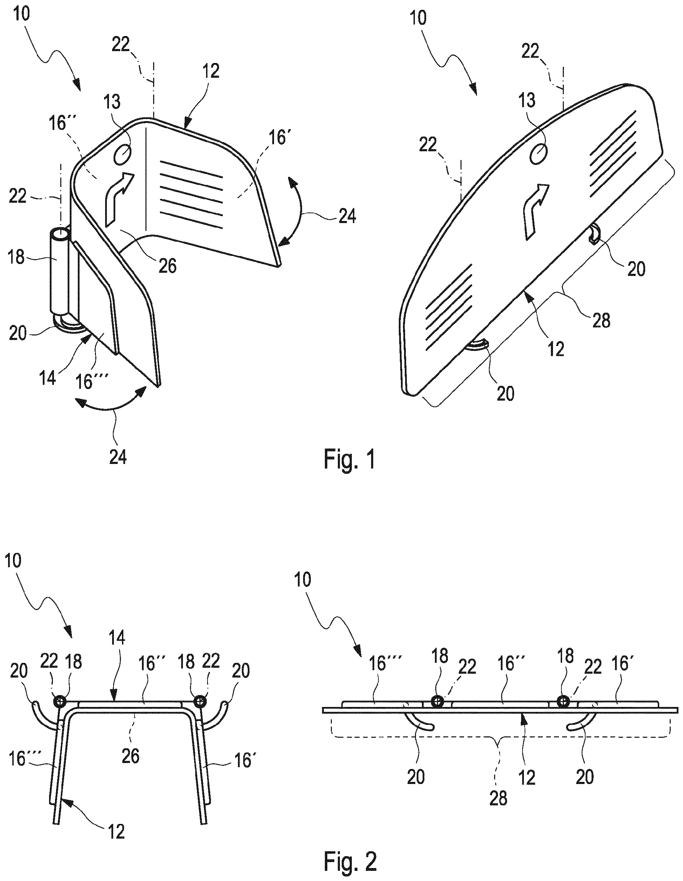

Figur 1 zeigt auf der linken Seite ein Kombiinstrument 10 in einer ersten Stellung und auf der rechten Seite das Kombiinstrument 10 in einer zweiten Stellung. Das Kombiinstrument 10 weist eine verformbare Anzeige 12 auf. Die verformbare Anzeige 12 ist auf einer Stützstruktur 14 angeordnet. Die Stützstruktur 14 weist in dieser Ausführungsform drei Stützelemente 16', 16", 16"' auf. Die verformbare Anzeige 12 ist eine OLED-Anzeige. Alternativ könnte auch eine Aktivmatrix-OLED-Anzeige (AMOLED) verwendet werden.

Mittels Bewegungselementen 18 sind die Stützelemente 16', 16", 16"' bewegbar. Die Bewegungselemente 18 bewegen die Stützelemente 16', 16", 16"' entlang Schienen 20. Die Schienen 20 sind dazu eingerichtet, die Stützelemente 16', 16", 16"' auf der jeweiligen Bahn zu führen. Während der Bewegung der Stützelemente 16', 16", 16"' entlang der Schienen 20, verändern die Stützelemente 16', 16", 16"' ihre Stellung um jeweilige Drehachsen 22, wie durch die Pfeile 24 angedeutet ist. Die Drehachsen 22 sind im Wesentlichen parallel zueinander ausgerichtet.

In der Anzeige 12 ist ein Sensorelement 13 integriert angeordnet. Das Sensorelement 13 ist dazu eingerichtet, eine auf die Anzeige 12 einfallende Lichtintensität zu messen und auszuwerten. Entsprechend der ausgewerteten Lichtintensität kann die Anzeige 12 über die jeweiligen Stützelemente 16', 16", 16"' so verformt werden, dass einzelne Abschnitte der Anzeige 12 einen Schatten auf einen anderen Abschnitt der Anzeige 12 werfen. Dadurch bleiben auf der verformbaren Anzeige 12 angezeigte Inhalte 26 gut ablesbar. Die Bewegungselemente 18 zum Steuern der Stützelemente 16', 16", 16"' können also abhängig von einer einfallenden Lichtintensität oder anderen Umwelteinflüssen gesteuert werden. Dazu wird entsprechend der ausgewerteten Lichtintensität ein Signal an eine nicht gezeigte Steuereinrichtung gesendet, die dann die Bewegungselemente 18 ansteuert.

Das Sensorelement 13 kann alternativ auch in einem Bereich um die verformbare Anzeige 12 angeordnet sein, um die Lichtintensität in dem Bereich der verformbaren Anzeige 12 zu messen. Ist das Sensorelement in einem Bereich um die verformbare Anzeige 12 angeordnet, wird kein Schatten von der verformten Anzeige auf das Sensorelement 13 geworfen. Dadurch kann das Sensorelement 13 unbeeinflusst von dem Schatten, also auch unbeeinflusst von der Stellung der verformbaren Anzeige 12 die Lichtintensität im Bereich der verformbaren Anzeige 12 messen.

In der ersten Stellung des Kombiinstruments 10, die auf der linken Seite der Figur 1 gezeigt ist, sind für den Fahrer Inhalte 26, wie bspw. Basisinformationen, wahrnehmbar, die auf einem mittleren Abschnitt der Anzeige 12 angezeigt werden. Der mittlere Abschnitt ist auf dem Stützelement 16" angeordnet. Die jeweils anderen beiden Abschnitte, die mit den jeweiligen Stützelementen 16' bzw. 16"' verbunden sind, sind nach innen geklappt, wodurch sich die Krümmung der Anzeige 12 geändert hat. Dadurch ist die verformbare Anzeige 12 gekrümmt angeordnet. Die auf diesen Abschnitten der verformbaren Anzeige 12 angezeigten Informationen sind für den Fahrer ausgeblendet. Das Kombiinstrument 10 wird eine solche Stellung z.B. während eines ausgewählten Sportfahrmodus einnehmen. Die nach innen geklappten Abschnitte der verformbaren Anzeige 12 schützen den Abschnitt der Anzeige 12, der die Basisinformation 26 anzeigt auch vor Sonneneinstrahlung, z.B. bei seitlichem Sonnenlicht, und erhöhen damit die Lesbarkeit der Anzeige 12.

In der auf der rechten Seite der Figur 1 gezeigten zweiten Stellung des Kombiinstruments 10 sind die Stützelemente 16', 16", 16"' durch die Bewegungselemente 18 entlang der Schienen 20 nach außen bewegt wurden. Die verformbare Anzeige 12 ist nun im Wesentlichen ebenflächig ausgebildet. Für den Fahrer sind nun auf der verformbaren Anzeige 12 alle Informationen 28 wahrnehmbar. Diese Stellung wird das Kombiinstrument 10 bzw. die Anzeige 12 z.B. bei geringem Lichteinfall einnehmen.

In der Draufsicht der Figur 2 erkennt man, dass die verformbare Anzeige 12 mit den drei Stützelementen 16', 16", 16"' verbunden ist. Die jeweiligen Stützelemente 16', 16", 16"' weisen einen Abstand zueinander auf, wodurch sich in der gezeigten Ausführungsform die verformbare Anzeige 12 in drei Abschnitte teilt. Die Bereiche der verformbaren Anzeige 12, die nicht mit den Stützelementen 16', 16", 16"' verbunden sind, sind verformbar und ermöglichen die Bewegung der verformbaren Anzeige 12, wenn die Stützelemente 16', 16", 16"' entlang der Schienen 20 bewegt werden. Insbesondere ändern diese Bereiche der verformbaren Anzeige 12 ihre Krümmung, wenn die Stützelemente 16', 16", 16"' bewegt werden.

Die Stellung der Stützelemente 16', 16", 16"' kann abhängig von der gemessenen Lichtintensität oder von einem jeweiligen von dem Fahrer wählbaren Fahrtmodus verändert werden. In der linken Stellung schirmen bei einer hohen einfallenden Lichtintensität die zu den Stützelementen 16"' und 16' zugehörigen Abschnitte der Anzeige 12 den zu dem Stützelement 16" zugehörigen Abschnitt der Anzeige 12 vor dem hohen Lichteinfall ab, so dass die Inhalte in diesem Abschnitt gut ablesbar sind. Alternativ kann die Stellung auf der linken Seite auch bei einem Sportfahrmodus eingenommen werden. Dabei werden nur wesentliche Informationen auf dem abgeschirmten Abschnitt angezeigt.

Die auf der rechten Seite gezeigte Stellung wir bei geringer gemessenen Lichtintensität eingenommen. Alternativ kann diese Stellung auch bei einem Normalfahrtmodus eingenommen werden, so dass mehr Inhalte sichtbar sind, wie bspw. zusätzliche Navigationsinhalte 28, wie in Figur 1 auf der rechten Seite erkennbar.

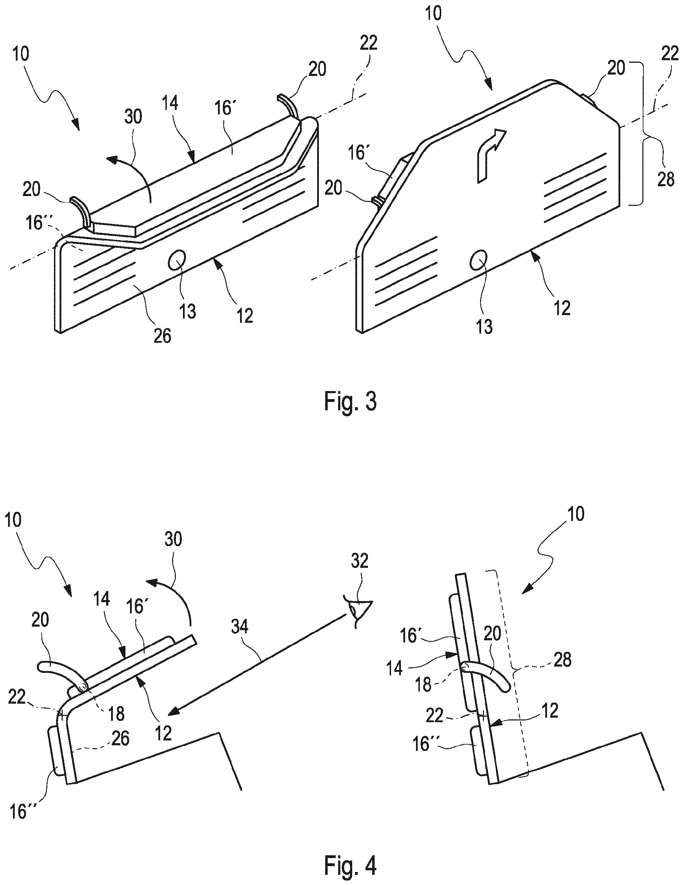

Figur 3 zeigt eine Ausführungsform des Kombiinstruments 10, bei der die Drehachse 22 so angeordnet ist, dass wenigstens ein Abschnitt, hier der obere Abschnitt der verformbaren Anzeige 12, nach oben bzw. nach unten schwenkt, wie durch den Pfeil 30 angedeutet ist. Das Sensorelement 13 ist bei dieser Ausführungsform auf einem unteren Abschnitt der Anzeige 12 angeordnet. Der obere Abschnitt des Kombiinstruments 10 wird entlang der Schienen 20 bewegt, die nun ebenfalls entsprechend der anderen Anordnung der Drehachse 22 angeordnet sind. Auf der verformbaren Anzeige 12 werden die Basisinformationen 26 nun auf dem unteren Abschnitt angezeigt. Diese Stellung wird das Kombiinstrument z.B. bei starkem Lichteinfall einnehmen.

In der zweiten Stellung, die in Figur 3 auf der rechten Seite veranschaulicht ist, ist die verformbare Anzeige 12 wieder im Wesentlichen ebenflächig ausgebildet. Dadurch sind alle anzeigbaren Informationen 28 wahrnehmbar. Diese Stellung wird das Kombiinstrument z.B. bei wenig Lichteinfall einnehmen.

Figur 4 zeigt eine Seitenschnittansicht der Ausführungsform des Kombiinstruments 10 der Figur 3. Die verformbare Anzeige 12 ist in zwei Abschnitten mit jeweiligen Stützelementen 16' und 16" verbunden. In dem Abschnitt, der nicht mit Stützelementen 16', 16" verbunden ist, ändert sich die Krümmung der verformbaren Anzeige 12, wenn das Stützelement 16' entlang der Schienen 20 bewegt und entlang des Pfeils 30 geschwenkt wird.

Der in der Figur 4 obere Abschnitt der verformbaren Anzeige 12 ist so ausgerichtet, dass der Fahrer 32 entlang des Sichtstrahls 34 die Anzeige 12 im unteren Abschnitt wahrnehmen kann.

Auf der rechten Seite der Figur 4 ist das Kombiinstrument 10 wieder in der zweiten Stellung dargestellt, in der die verformbare Anzeige 12 im Wesentlichen ebenflächig angeordnet ist. Durch diese lichtabhängige Verstellbarkeit kann das Kombiinstrument 10 ohne Schutzabdeckung, einer sogenannten Hutze, ausgebildet sein.

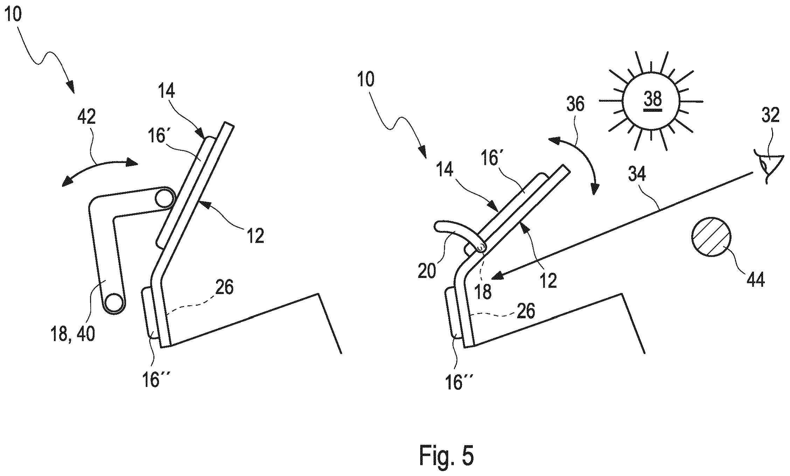

Figur 5 zeigt eine weitere Seitenansicht des Kombiinstruments 10. Figur 5 zeigt, dass die Stellung der verformbaren Abschnitte der verformbaren Anzeige 12 abhängig von dem Lichteinfall sein können. Dazu schwenkt das Kombiinstrument 10 entlang des Pfeils 36. In der Stellung auf der linken Seite der Figur 5 ist das Kombiinstrument 10 insgesamt etwas steiler angeordnet als in der Stellung auf der rechten Seite. Die Stellung auf der linken Seite wird das Kombiinstrument 10 einnehmen, wenn wenig Licht einfällt oder die Sonne 38 einen entsprechenden Stand relativ zu der verformbaren Anzeige 12 einnimmt. Die Stellung auf der rechten Seite der Figur 5 wird das Kombiinstrument einnehmen, wenn viel Licht auf die verformbare Anzeige 12 fällt, um eine entsprechend gute Lesbarkeit zu gewährleisten. In jedem Fall ist das Kombiinstrument 10 so angeordnet, dass der Fahrer 32 die verformbare Anzeige 12, zumindest teilweise über den Sichtstrahl 34 einsehen kann.

Figur 5 zeigt darüber hinaus zwei Möglichkeiten zur Ausführung der Bewegung des Kombiinstruments 10. Die Bewegungselemente 18 umfassen auf der linken Seite der Figur 5 eine Hebelanordnung 40. Bei Betätigung der Bewegungselemente 18 schwenkt die Hebelanordnung 40 entlang des Pfeils 42. Dadurch wirkt die Hebelanordnung 40 auf das obere Stützelement 16' oder das untere Stützelement 16" ein und verändert deren jeweilige Stellung.

Auf der rechten Seite der Figur 5 wird das obere Stützelement 16', wie bereits beschrieben, mittels in dieser Figur nicht gezeigten Bewegungselementen 18 entlang der Schienen 20 bewegt. Dadurch schwenkt das obere Stützelement 16' entlang des Pfeils 36. Das Kombiinstrument 10 ist in Fahrtrichtung vor einem Lenkrad 44 angeordnet.

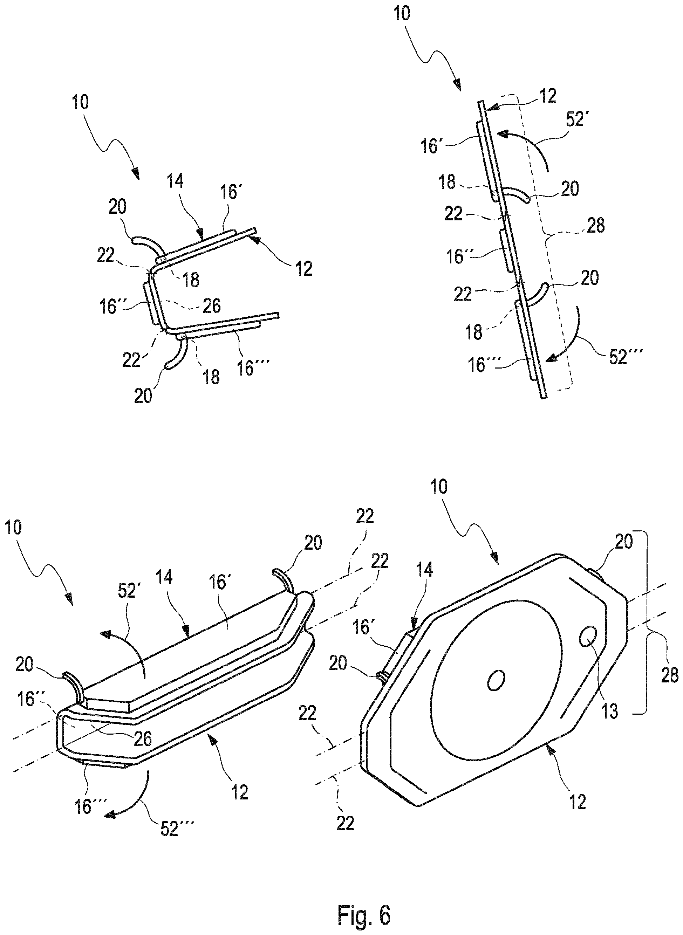

Figur 6 zeigt weitere Ansichten einer weiteren Ausführungsform des Kombiinstruments 10 mit drei Abschnitten, die zueinander verformbar sind. Die verformbare Anzeige 12 ist auf drei Stützelementen 16', 16", 16"' angeordnet. Dabei ist das obere Stützelement 16' und das untere Stützelement 16"' um eine jeweilige Drehachse 22 schwenkbar. Wie vorstehend bereits beschrieben, werden die Stützelemente 16', 16"' entlang der Schienen 20 bewegt. Das obere Stützelement 16' schwenkt dabei entlang des Pfeils 52'. Das untere Stützelement 16"' schwenkt dabei entlang des Pfeils 52"'. Die Drehachsen 22 sind dabei parallel zueinander angeordnet.

In der unteren linken Ansicht in Figur 6 ist das Kombiinstrument 10 in einer perspektivischen Basisdarstellung gezeigt. Dabei sind das obere Stützelement 16' und das untere Stützelement 16"' jeweils eingeklappt. Ein Fahrer nimmt in dieser Anordnung des Kombiinstruments 10 die Basisinformation 26 (Fig. 1) auf dem mittleren Abschnitt wahr.

In der unteren rechten Ansicht der Figur 6 sind die angezeigten Inhalte 28 komplett dargestellt. Das obere Stützelement 16' und das untere Stützelement 16"' sind entlang der Pfeile 52' bzw. 52"' ausgeklappt. In dieser Anordnung nimmt der Fahrer die dargestellten Informationen 28 komplett wahr. In dem mittleren Abschnitt ist das Sensorelement 13 angeordnet, um den Lichteinfall zu messen.

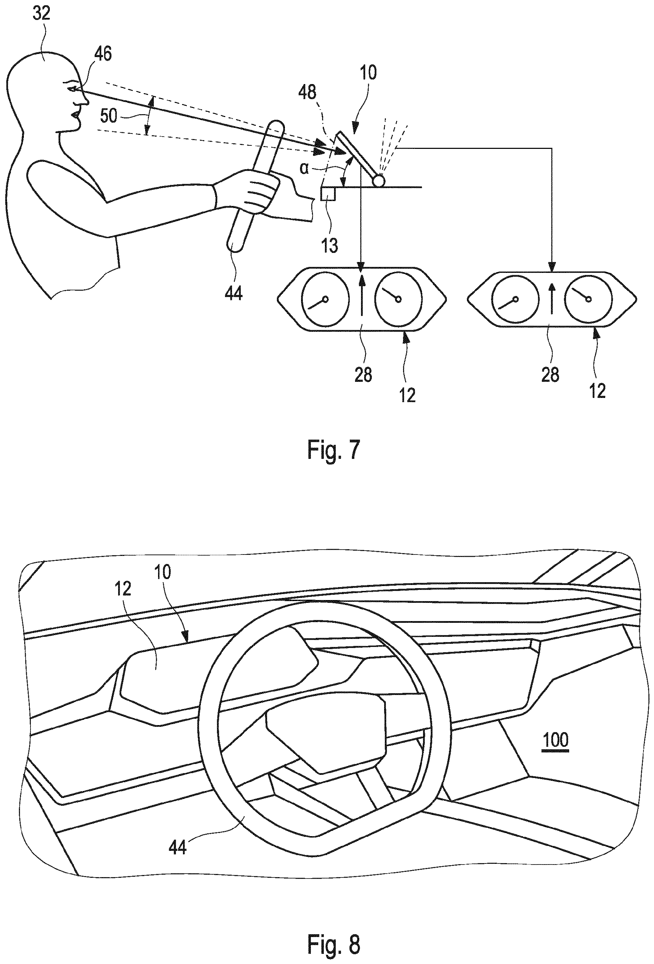

Figur 7 zeigt eine Ausführungsform des Kombiinstruments 10, bei der ein Augpunkt 46 des Fahrers 32 erkannt und ausgewertet wird. Der Augpunkt kann dabei von einem Sensorelement 13, das in einem Bereich um das Kombiinstrument 10 angeordnet ist, erfasst werden. Das Kombiinstrument 10 ist zum Schutz vor Sonneneinstrahlung um einen Winkel α geneigt. Damit der Fahrer 32 die Informationen auf der verformbaren Anzeige 12 weiterhin ungehindert wahrnehmen kann, ist das Kombiinstrument dazu eingerichtet, die Darstellung der Informationen zu verzerren. Der linke vergrößerte Ausschnitt der verformbaren Anzeige 12 zeigt eine solche verzerrte Darstellung. Die Informationen 28 sind etwas nach oben in die Länge gezogen bzw. verzerrt. Dadurch nimmt der Fahrer 32 die Informationen 28 in einer Darstellungsebene 48 unverzerrt wahr, wie in der rechten vergrößerten Darstellung gezeigt ist.

Ändert sich nun die Lage des Augpunktes 46 in Bezug auf das Kombiinstrument 10, weil z.B. ein größerer oder kleinerer Fahrer 32 am Lenkrad 44 Platz nimmt, ändert sich auch der Winkel 50, mit dem auf die verformbare Anzeige 12 geblickt wird, wie durch die unterschiedliche Linienführung angedeutet ist. Das Kombiinstrument 10 ist nun dazu eingerichtet, diese Änderung des Augpunktes 46 zu erkennen, bspw. durch ein Kamerasystem. Erkennt das Kombiinstrument 10 eine Änderung, ist es dazu eingerichtet, die Verzerrung derart anzupassen, damit der Fahrer 32 die Darstellung der Information 28 weiterhin unverzerrt wahrnimmt.

Figur 8 zeigt einen Fahrzeuginnenraum 100 eines Fahrzeugs mit einem Kombiinstrument 10. Der Fahrzeuginnenraum 100 ist frei von einer Sonnenschutzeinrichtung für die verformbare Anzeige 12.

Figur 9 zeigt eine Ausführungsform eines Bediendisplays 10' mit einer verformbaren Anzeige 12, das in einer Mittelkonsole 58 angeordnet ist. Figur 9 zeigt somit, dass die Merkmale des Kombiinstruments 10 auch auf andere Anzeigevorrichtungen in einem Fahrzeug anwendbar sind. Die Mittelkonsole 58 weist einen Gangwahlhebel 56 auf. Bei der gezeigten Ausführungsform des Bediendisplays sind die Stützelemente 16', 16", 16"' übereinander in Schichten angeordnet. In der in Figur 9 gezeigten zweiten Stellung, sind die Stützelemente 16', 16", 16"' so zueinander verschoben, dass die verformbare Anzeige 12 ablesbar ist. Die Stützelemente 16', 16", 16"' können dabei in der zweiten Stellung nebeneinander angeordnet sein. Die jeweiligen Ränder der Stützelemente 16', 16", 16"' können jeweils mit einer benachbarten Schicht überlappen. In der nicht gezeigten ersten Stellung liegen die Stützelemente 16', 16", 16"' in Schichten übereinander vor. An einem oberen Ende 54 des Bediendisplays 10' ist das Sensorelement 13 angeordnet.

Figur 10 zeigt den Stand der Technik einer bisherigen Ausführungsform eines Kombiinstruments in einer Instrumenteneinheit. Deutlich zu erkennen ist die dominierende Sonnenblende zum Abschirmen des Kombiinstruments.

In jedem Fall der vorliegenden Erfindung ist das Kombiinstrument 10 frei von einer zusätzlichen Sonnenschutzeinrichtung, wodurch die Instrumententafel leichter ausgeführt werden kann. Dadurch entsteht ein erhöhtes Raumgefühl und bewirkt eine optische Modernität. Darüber hinaus kann über die Form bzw. die Stellung des Kombiinstruments ein jeweiliger Fahrmodus zum Ausdruck gebracht werden. Des Weiteren stellt eine solche Inszenierung eine Differenzierung zum Wettbewerb dar.

## Patentansprüche

1. Kombiinstrument (10) zum Anzeigen von Fahrzeuginformationen (26, 28) mit einer verformbaren Anzeige (12), einer Stützstruktur (14), mindestens einem Sensorelement (13) und mindestens einem Bewegungselement (18), wobei die verformbare Anzeige (12) auf der Stützstruktur (14) angeordnet ist und die Stützstruktur (14) abhängig von von dem Sensorelement (13) wahrgenommenen Umwelteinflüssen aus einer ersten Stellung in eine zweite Stellung mittels des wenigstens einen Bewegungselements (18) bewegbar ist, wobei die verformbare Anzeige (12) um eine erste Achse (22) und/oder um wenigstens eine zweite Achse (22) zumindest abschnittweise drehbar und dadurch verformbar ist, **dadurch gekennzeichnet, dass** die zweite Achse (22) im Wesentlichen quer zu der ersten Achse (22) angeordnet ist.

2. Kombiinstrument (10) nach Anspruch 1, **dadurch gekennzeichnet, dass** die Stützstruktur (14) mehrere einzelne Stützelemente (16, 16', 16", 16"') umfasst, die unabhängig voneinander bewegbar sind.

3. Kombiinstrument (10) nach Anspruch 1 oder 2, **dadurch gekennzeichnet, dass** die Stützstruktur (14) abhängig von einer Fahrzeugeinstellung aus der ersten Stellung in die zweite Stellung bewegbar ist.

4. Kombiinstrument (10) nach einem der vorstehenden Ansprüche, **dadurch gekennzeichnet, dass** in der ersten Stellung die verformbare Anzeige (12) im Wesentlichen ebenflächig ausgebildet ist.

5. Kombiinstrument (10) nach einem der Ansprüche 2 bis 4, **dadurch gekennzeichnet, dass** in einer Zwischenstellung zwischen der ersten und der zweiten Stellung und/oder in der ersten Stellung und/oder in der zweiten Stellung wenigstens ein Abschnitt der verformbaren Anzeige (12) einen von Null Grad (0°) verschiedenen Winkel zu den jeweiligen anderen Abschnitten der verformbaren Anzeige (12) aufweist.

6. Kombiinstrument (10) nach einem der vorstehenden Ansprüche, **dadurch gekennzeichnet, dass** das Kombiinstrument (10) dazu eingerichtet ist, die Anzeigen der Fahrzeuginformation (26, 28) in Abhängigkeit der Stellung der Stützstruktur (14) für einen Fahrer (32) in einem gleichbleibenden Winkel anzuzeigen.

7. Kombiinstrument (10) nach einem der vorstehenden Ansprüche, **dadurch gekennzeichnet, dass** das Kombiinstrument (10) eingerichtet ist, einen Augpunkt (46) eines Fahrers (32) zu verfolgen und die Anzeige der Informationen (26, 28) auf der verformbaren Anzeige (12) an eine Position des Augpunktes (46) anzupassen

8. Kombiinstrument (10) nach einem der vorstehenden Ansprüche, **dadurch gekennzeichnet, dass** die verformbare Anzeige (12) eine OLED-Anzeige ist.

9. Kombiinstrument (10) nach einem der vorstehenden Ansprüche, **dadurch gekennzeichnet, dass** das Bewegungselement (18) eine Hebelanordnung (40) umfasst.

10. Kombiinstrument (10) nach einem der vorstehenden Ansprüche, **dadurch gekennzeichnet, dass** die Stützelemente (16, 16', 16", 16"') in Schichten, die in Bezug zueinander verschiebbar sind, übereinander angeordnet sind.

11. Fahrzeug mit einem Fahrzeuginnenraum, der wenigstens ein Kombiinstrument (10) nach einem der vorstehenden Ansprüche umfasst.

12. Fahrzeug nach Anspruch 11, **dadurch gekennzeichnet, dass** eine Instrumenteneinheit wenigstens ein Kombiinstrument (12) nach einem der Ansprüche 1 bis 10 umfasst.

13. Fahrzeug nach Anspruch 12, **dadurch gekennzeichnet, dass** die Instrumenteneinheit frei von einer Abschirmvorrichtung zum Abschirmen der verformbaren Anzeige (12) vor Sonnenlicht ist.

## Claims

1. Instrument cluster (10) for displaying vehicle information (26, 28) having a deformable display (12), a support structure (14), at least one sensor element (13) and at least one movement element (18), wherein the deformable display (12) is arranged on the support structure (14) and the support structure (14) is movable from a first position into a second position by means of the at least one movement element (18) depending on environment influences detected by the sensor element (13), wherein the deformable display (12) is at least in portions rotatable about a first axis (22) and/or about at least one second axis (22) and thereby deformable, **characterised in that** the second axis (22) is arranged substantially transverse to the first axis (22).

2. Instrument cluster (10) according to claim 1, **characterised in that** the support structure (14) comprises several individual support elements (16, 16', 16", 16"') which are movable independently of one another.

3. Instrument cluster (10) according to claim 1 or 2, **characterised in that** the support structure (14) is movable from the first position into the second position depending on a vehicle setting.

4. Instrument cluster (10) according to any of the preceding claims, **characterised in that** in the first position the deformable display (12) is formed substantially planar.

5. Instrument cluster (10) according to any of claims 2 to 4, **characterised in that** in an interim position between the first and the second position and/or in the first position and/or in the second position at least one portion of the deformable display (12) has an angle different from zero degrees (0°) from the respective other portions of the deformable display (12).

6. Instrument cluster (10) according to any of the preceding claims, **characterised in that** the instrument cluster (10) is configured to display the displays of the vehicle information (26, 28) for a driver (32), depending on the position of the support structure (14), at an angle which remains the same.

7. Instrument cluster (10) according to any of the preceding claims, **characterised in that** the instrument cluster (10) is configured to follow an eye point (46) of a driver (32) and to adapt the display of the information (26, 28) on the deformable display (12) to a position of the eye point (46).

8. Instrument cluster (10) according to any of the preceding claims, **characterised in that** the deformable display (12) is an OLED display.

9. Instrument cluster (10) according to any of the preceding claims, **characterised in that** the movement element (18) includes a lever arrangement (40).

10. Instrument cluster (10) according to any of the preceding claims, **characterised in that** the support elements (16, 16', 16", 16"') are arranged above one another in layers which are displaceable with respect to one another.

11. Vehicle with a vehicle interior which includes at least one instrument cluster (10) according to any of the preceding claims.

12. Vehicle according to claim 11, **characterised in that** an instrument unit includes at least one instrument cluster (12) according to any of claims 1 to 10.

13. Vehicle according to claim 12, **characterised in that** the instrument unit is free from a shading device for shading the deformable display (12) from sunlight.

## Revendications

1. Combiné d'instruments (10) pour afficher des informations relatives au véhicule (26, 28) avec un affichage déformable (12), une structure de support (14), au moins un élément de capteur (13) et au moins un élément de déplacement (18), dans lequel l'affichage déformable (12) est agencé sur la structure de support (14) et la structure de support (14) peut être déplacée d'une première position à une seconde position au moyen de l'au moins un élément de déplacement (18), en fonction des influences environnementales perçues par l'élément de capteur (13), dans lequel l'affichage déformable (12) peut tourner au moins par sections autour d'un premier axe (22) et/ou autour d'au moins un second axe (22) et est ainsi déformable, **caractérisé en ce que** le second axe (22) est agencé de manière sensiblement transversale au premier axe (22).

2. Combiné d'instruments (10) selon la revendication 1, **caractérisé en ce que** la structure de support (14) comprend plusieurs éléments de supports individuels (16, 16', 16", 16"') qui peuvent être déplacés indépendamment l'un de l'autre.

3. Combiné d'instruments (10) selon la revendication 1 ou 2, **caractérisé en ce que** la structure de support (14) peut être déplacée de la première position à la seconde position en fonction d'un réglage de véhicule.

4. Combiné d'instruments (10), selon l'une quelconque des revendications précédentes, **caractérisé en ce que**, dans la première position, l'affichage déformable (12) est réalisé de manière sensiblement plane.

5. Combiné d'instruments (10) selon l'une quelconque des revendications 2 à 4, **caractérisé en ce que**, dans une position intermédiaire entre la première et la seconde position et/ou dans la première position et/ou dans la seconde position, au moins une section de l'affichage déformable (12) présente un angle différent de zéro degré (0°) par rapport aux autres sections respectives de l'affichage déformable (12).

6. Combiné d'instruments (10) selon l'une quelconque des revendications précédentes, **caractérisé en ce que** le combiné d'instruments (10) est disposé de manière à afficher les affichages des informations relatives au véhicule (26, 28) en fonction de la position de la structure de support (14) pour un conducteur (32) à un angle constant.

7. Combiné d'instruments (10) selon l'une quelconque des revendications précédentes, **caractérisé en ce que** le combiné d'instruments (10) est disposé de manière à suivre un point de vision (46) d'un conducteur (32) et à adapter l'affichage des informations (26, 28) sur l'affichage déformable (12) à une position du point de vision (46).

8. Combiné d'instruments (10) selon l'une quelconque des revendications précédentes, **caractérisé en ce que** l'affichage déformable (12) est un affichage OLED.

9. Combiné d'instruments (10) selon l'une quelconque des revendications précédentes, **caractérisé en ce que** l'élément de déplacement (18) comprend un dispositif de levier (40).

10. Combiné d'instruments (10) selon l'une quelconque des revendications précédentes, **caractérisé en ce que** les éléments de support (16, 16', 16", 16"') sont agencés les uns au-dessus des autres en couches déplaçables les unes par rapport aux autres.

11. Véhicule équipé d'un habitacle de véhicule qui comprend au moins un combiné d'instruments (10) selon l'une quelconque des revendications précédentes.

12. Véhicule selon la revendication 11, **caractérisé en ce qu'**un ensemble instrument comprend au moins un combiné d'instruments (12) selon l'une quelconque des revendications 1 à 10.

13. Véhicule selon la revendication 12, **caractérisé en ce que** l'ensemble instrument est exempt d'un dispositif de protection pour protéger l'affichage déformable (12) de la lumière du soleil.
